# EUROPEAN PATENT APPLICATION

(11) **EP 1 213 782 A2**
(43) Date of publication of application: **12.06.2002**
(21) Application number: 01306744.2
(22) Date of filing: 07.08.2001
(51) Int. Cl.: H01M 10/40

(54) **Phosphate additives for nonaqueous electrolyte rechargeable electrochemical cells**

(30) Priority: 27.11.2000 US 723059
(71) Applicant: WILSON GREATBATCH LTD., Clarence New York 14031 (US)
(72) Inventor: Gan, Hong, East Amherst, New York 14051 (US); Takeuchi, Esther S., East Amherst, New York 14051 (US)
(74) Representative: Colmer, Stephen Gary

(57) **Abstract**

A lithium ion electrochemical cell having high charge/discharge capacity, long cycle life and exhibiting a reduced first cycle irreversible capacity, is described. The stated benefits are realized by the addition of at least one phosphate additive having the formula: (R¹O)P(=O) (OR²) (OR³) and wherein R¹, R² and R³ are the same or different, wherein at least one, but not all three, of the R groups is hydrogen, or at least one of the R groups has at least 3 carbon atoms and contains an sp or sp² hybridized carbon atom bonded to an sp³ hybridized carbon atom bonded to the oxygen atom bonded to the phosphorous atom.

## Description

### BACKGROUND OF INVENTION

The present invention generally relates to an alkali metal electrochemical cell, and more particularly, to a rechargeable alkali metal cell. Still more particularly, the present invention relates to a lithium ion electrochemical cell activated with an electrolyte having an additive provided to achieve high charge/discharge capacity, long cycle life and to minimize the first cycle irreversible capacity. According to the present invention, the preferred additive to the activating electrolyte is a phosphate compound.

Alkali metal rechargeable cells typically comprise a carbonaceous anode electrode and a lithiated cathode electrode. Due to the high potential of the cathode material (up to 4.3V vs. Li/Li⁺ for Li₁₋ₓCoO₂) and the low potential of the carbonaceous anode material (0.01V vs. Li/Li⁺ for graphite) in a fully charged lithium ion cell, the choice of the electrolyte solvent system is limited. Since carbonate solvents have high oxidative stability toward typically used lithiated cathode materials and good kinetic stability toward carbonaceous anode materials, they are generally used in lithium ion cell electrolytes. To achieve optimum cell performance (high rate capability and long cycle life), solvent systems containing a mixture of a cyclic carbonate (high dielectric constant solvent) and a linear carbonate (low viscosity solvent) are typically used in commercial secondary cells. Cells with carbonate based electrolytes are known to deliver more than 1,000 charge/discharge cycles at room temperature.

One aspect of the present invention involves the provision of ethylene carbonate (EC), dimethyl carbonate (DMC), ethylmethyl carbonate (EMC) and diethyl carbonate (DEC) as the solvent system for the activating electrolyte. Lithium ion cells with such electrolyte systems are capable of discharge at temperatures down to as low as -40°C while exhibiting good cycling characteristics. However, lithium ion cell design generally involves a trade off in one area for a necessary improvement in another, depending on the targeted cell application. The achievement of a lithium-ion cell capable of low temperature cycleability by use of the above quaternary solvent electrolyte, in place of a typically used binary solvent electrolyte (such as 1.0M LiPF₆/EC:DMC = 30:70, v/v which freezes at -11°C), is obtained at the expense of increased first cycle irreversible capacity during the initial charging (approximately 65 mAh/g graphite for 1.0M LiPF₆/EC:DMC:EMC:DEC = 45:22:24.8:8.2 vs. 35 mAh/g graphite for 1.0M LiPF₆/EC:DMC = 30:70). Due to the existence of this first cycle irreversible capacity, lithium ion cells are generally cathode limited. Since all of the lithium ions, which shuttle between the anode and the cathode during charging and discharging originally come from the lithiated cathode, the larger the first cycle irreversible capacity, the lower the cell capacity in subsequent cycles and the lower the cell efficiency. Thus, it is desirable to minimize or even eliminate the first cycle irreversible capacity in lithium ion cells while at the same time maintaining the low temperature cycling capability of such cells.

According to the present invention, these objectives are achieved by providing an inorganic or organic phosphate in the quaternary solvent electrolyte. Lithium ion cells activated with these electrolytes exhibit lower first cycle irreversible capacities relative to cells activated with the same quaternary solvent electrolyte devoid of the phosphate additive. As a result, cells including the phosphate additive present higher subsequent cycling capacity than control cells. The cycleability of the present invention cells at room temperature, as well as at low temperatures, i.e., down to about -40°C, is as good as cells activated with the quaternary electrolyte devoid of a phosphate additive.

### SUMMARY OF THE INVENTION

It is commonly known that when an electrical potential is initially applied to lithium ion cells constructed with a carbon anode in a discharged condition to charge the cell, some permanent capacity loss occurs due to the anode surface passivation film formation. This permanent capacity loss is called first cycle irreversible capacity. The film formation process, however, is highly dependent on the reactivity of the electrolyte components at the cell charging potentials. The electrochemical properties of the passivation film are also dependent on the chemical composition of the surface film.

The formation of a surface film is unavoidable for alkali metal systems, and in particular, lithium metal anodes, and lithium intercalated carbon anodes due to the relatively low potential and high reactivity of lithium toward organic electrolytes. The ideal surface film, known as the solid-electrolyte interphase (SEI), should be electrically insulating and ionically conducting. While most alkali metal, and in particular, lithium electrochemical systems meet the first requirement, the second requirement is difficult to achieve. The resistance of these films is not negligible, and as a result, impedance builds up inside the cell due to this surface layer formation which induces unacceptable polarization during the charge and discharge of the lithium ion cell. On the other hand, if the SEI film is electrically conductive, the electrolyte decomposition reaction on the anode surface does not stop due to the low potential of the lithiated carbon electrode.

Hence, the composition of the electrolyte has a significant influence on the discharge efficiency of alkali metal systems, and particularly the permanent capacity loss in secondary cells. For example, when 1.0M LiPF₆/EC:DMC = 30:70 is used to activate a secondary cell, the first cycle irreversible capacity is approximately 35 mAh/g of graphite. However, under the same cycling conditions, the first cycle irreversible capacity is found to be approximately 65 mAh/g of graphite when 1.0M LiPF₆/EC:DMC:EMC:DEC = 45:22:24.8:8.2 is used as the electrolyte. In contrast, lithium ion cells activated with the binary solvent electrolyte of ethylene carbonate and dimethyl carbonate cannot be cycled at temperatures less than about -11°C. The quaternary solvent electrolyte of EC, DMC, EMC and DEC, which enables lithium ion cells to cycle at much lower temperatures, is a compromise in terms of providing a wider temperature application with acceptable cycling efficiencies. It would be highly desirable to retain the benefits of a lithium ion cell capable of operating at temperatures down to as low as about -40°C while minimizing the first cycle irreversible capacity.

According to the present invention, this objective is achieved by adding a phosphate additive in the above described quaternary solvent electrolytes. In addition, this invention may be generalized to other nonaqueous organic electrolyte systems, such as binary solvent and ternary solvent systems, as well as the electrolyte systems containing solvents other than mixtures of linear or cyclic carbonates. For example, linear or cyclic ethers or esters may also be included as electrolyte components. Although the exact reason for the observed improvement is not clear, it is hypothesized that the phosphate additive competes with the existing electrolyte components to react on the carbon anode surface during initial lithiation to form a beneficial SEI film. The thusly formed SEI film is electrically more insulating than the film formed without the phosphate additive and, as a consequence, the lithiated carbon electrode is better protected from reactions with other electrolyte components. Therefore, lower first cycle irreversible capacity is obtained.

These and other objects of the present invention will become increasingly more apparent to those skilled in the art by reference to the following description.

### DETAILED DESCRIPTION OF THE PREFERRED EMBODIMENTS

A secondary electrochemical cell constructed according to the present invention includes an anode active material selected from Groups IA, IIA, or IIIB of the Periodic Table of Elements, including the alkali metals lithium, sodium, potassium, etc. The preferred anode active material comprises lithium.

In secondary electrochemical systems, the anode electrode comprises a material capable of intercalating and de-intercalating the alkali metal, and preferably lithium. A carbonaceous anode comprising any of the various forms of carbon (e.g., coke, graphite, acetylene black, carbon black, carbon fibers, glassy carbon, etc.) which are capable of reversibly retaining the lithium species, is preferred. Graphite is particularly preferred due to its relatively high lithium-retention capacity.
Regardless of the form of the carbon, fibers of the carbonaceous material are particularly advantageous because the fibers have excellent mechanical properties which permit them to be fabricated into rigid electrodes that are capable of withstanding degradation during repeated charge/discharge cycling. Moreover, the high surface area of carbon fibers allows for rapid charge/discharge rates. A preferred carbonaceous material for the anode of a secondary electrochemical cell is described in U.S. Patent No. 5,443,928 to Takeuchi et al., which is assigned to the assignee of the present invention and incorporated herein by reference.

A typical secondary cell anode is fabricated by mixing about 90 to 97 weight percent graphite with about 3 to 10 weight percent of a binder material which is preferably a fluoro-resin powder such as polytetrafluoroethylene (PTFE), polyvinylidene fluoride (PVDF), polyethylenetetrafluoroethylene (ETFE), polyamides and polyimides, and mixtures thereof. This electrode active admixture is provided on a current collector such as of a nickel, stainless steel, or copper foil or screen by casting, pressing, rolling or otherwise contacting the active admixture thereto.

The anode component further has an extended tab or lead of the same material as the anode current collector, i.e., preferably nickel, integrally formed therewith such as by welding and contacted by a weld to a cell case of conductive metal in a case-negative electrical configuration. Alternatively, the carbonaceous anode may be formed in some other geometry, such as a bobbin shape, cylinder or pellet to allow an alternate low surface cell design.

The cathode of a secondary cell preferably comprises a lithiated material that is stable in air and readily handled. Examples of such air-stable lithiated cathode materials include oxides, sulfides, selenides, and tellurides of such metals as vanadium, titanium, chromium, copper, molybdenum, niobium, iron, nickel, cobalt and manganese. The more preferred oxides include LiNiO₂, LiMn₂O₄, LiCoO₂, LiCo_{0.92}Sn_{0.08}O₂ and LiCo₁₋ₓNiₓO₂.

Before fabrication into an electrode for incorporation into an electrochemical cell, the lithiated active material is preferably mixed with a conductive additive. Suitable conductive additives include acetylene black, carbon black and/or graphite. Metals such as nickel, aluminum, titanium and stainless steel in powder form are also useful as conductive diluents when mixed with the above listed active materials. The electrode further comprises a fluoro-resin binder, preferably in a powder form, such as PTFE, PVDF, ETFE, polyamides and polyimides, and mixtures thereof.

To discharge such secondary cells, the lithium ion comprising the cathode is intercalated into the carbonaceous anode by applying an externally generated electrical potential to recharge the cell. The applied recharging electrical potential serves to draw the alkali metal ions from the cathode material, through the electrolyte and into the carbonaceous anode to saturate the carbon comprising the anode. The resulting LiₓC₆ electrode can have an x ranging between 0.1 and 1.0. The cell is then provided with an electrical potential and is discharged in a normal manner.

An alternate secondary cell construction comprises intercalating the carbonaceous material with the active alkali material before the anode is incorporated into the cell. In this case, the cathode body can be solid and comprise, but not be limited to, such materials as manganese dioxide, silver vanadium oxide, copper silver vanadium oxide, titanium disulfide, copper oxide, copper sulfide, iron sulfide, iron disulfide and fluorinated carbon. However, this approach is compromised by the problems associated with handling lithiated carbon outside of the cell. Lithiated carbon tends to react when contacted by air.

The secondary cell of the present invention includes a separator to provide physical segregation between the anode and cathode active electrodes. The separator is of an electrically insulative material to prevent an internal electrical short circuit between the electrodes, and the separator material also is chemically unreactive with the anode and cathode active materials and both chemically unreactive with and insoluble in the electrolyte. In addition, the separator material has a degree of porosity sufficient to allow flow therethrough of the electrolyte during the electrochemical reaction of the cell. The form of the separator typically is a sheet which is placed between the anode and cathode electrodes. Such is the case when the anode is folded in a serpentine-like structure with a plurality of cathode plates disposed intermediate the anode folds and received in a cell casing or when the electrode combination is rolled or otherwise formed into a cylindrical "jellyroll" configuration.

Illustrative separator materials include fabrics woven from fluoropolymeric fibers of polyethylenetetrafluoroethylene and polyethylenechlorotrifluoroethylene used either alone or laminated with a fluoropolymeric microporous film. Other suitable separator materials include non-woven glass, polypropylene, polyethylene, glass fiber materials, ceramics, a polytetraflouroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.).

The choice of an electrolyte solvent system for activating an alkali metal electrochemical cell, and particularly a fully charged lithium ion cell is very limited due to the high potential of the cathode material (up to 4.3V vs. Li/Li⁺ for Li₁₋ₓCoO₂) and the low potential of the anode material (0.01V vs. Li/Li⁺ for graphite). According to the present invention, suitable nonaqueous electrolytes are comprised of an inorganic salt dissolved in a nonaqueous solvent and more preferably an alkali metal salt dissolved in a quaternary mixture of organic carbonate solvents comprising dialkyl (non-cyclic) carbonates selected from dimethyl carbonate (DMC), diethyl carbonate (DEC), dipropyl carbonate (DPC), ethylmethyl carbonate (EMC), methylpropyl carbonate (MPC) and ethylpropyl carbonate (EPC), and mixtures thereof, and at least one cyclic carbonate selected from propylene carbonate (PC), ethylene carbonate (EC), butylene carbonate (BC) and vinylene carbonate (VC), and mixtures thereof. Organic carbonates are generally used in the electrolyte solvent system for such battery chemistries because they exhibit high oxidative stability toward cathode materials and good kinetic stability toward anode materials.

Preferred electrolytes according to the present invention comprise solvent mixtures of EC:DMC:EMC:DEC. Most preferred volume percent ranges for the various carbonate solvents include EC in the range of about 20% to about 50%; DMC in the range of about 12% to about 75%; EMC in the range of about 5% to about 45%; and DEC in the range of about 3% to about 45%. In a preferred form of the present invention, the electrolyte activating the cell is at equilibrium with respect to the ratio of DMC:EMC:DEC. This is important to maintain consistent and reliable cycling characteristics. The reason for this is that it is known that due to the presence of low-potential (anode) materials in a charged cell, an un-equilibrated mixture of DMC:DEC in the presence of lithiated graphite (LiC₆∼0.01 V vs Li/Li⁺) results in a substantial amount of EMC being formed. This phenomenon is described in detail in U.S. patent application Serial No. 09/669,936, filed September 26, 2000, which is assigned to the assignee of the present invention and incorporated herein by reference. Electrolytes containing this quaternary carbonate mixture exhibit freezing points below -50°C, and lithium ion cells activated with such mixtures have very good cycling behavior at room temperature as well as very good discharge and charge/discharge cycling behavior at temperatures below -40°C.

Known lithium salts that are useful as a vehicle for transport of alkali metal ions from the anode to the cathode, and back again include LiPF₆, LiBF₄, LiAsF₆, LiSbF₆, LiClO₄, LiAlCl₄, LiGaCl₄, LiC(SO₂CF₃)₃, LiNO₃, LiN(SO₂CF₃)₂, LiSCN, LiO₃SCF₂CF₃, LiC₆F₅SO₃, LiO₂CCF₃, LiSO₃F, LiB(C₆H₅)₄ and LiCF₃SO₃, and mixtures thereof. Suitable salt concentrations typically range between about 0.8 to 1.5 molar.

In accordance with the present invention, at least one organic phosphate additive is provided as a cosolvent in the electrolyte solution of the previously described alkali metal ion or rechargeable electrochemical cell. The phosphate additive is preferably has the general formula (R¹O)P(=O) (OR²) (OR³) wherein R¹, R² and R³ are the same or different, and with at least one, but not all three of the R groups being hydrogen. Or, at least one of the R groups has at least 3 carbon atoms and contains an sp or sp² hybridized carbon atom bonded to an sp³ hybridized carbon atom bonded to the oxygen atoms bonded to the phosphorous atom.

Examples of phosphate compounds having the bond structure of C(sp²)-C(sp³)-O-P(=O) (OR)² include the following:

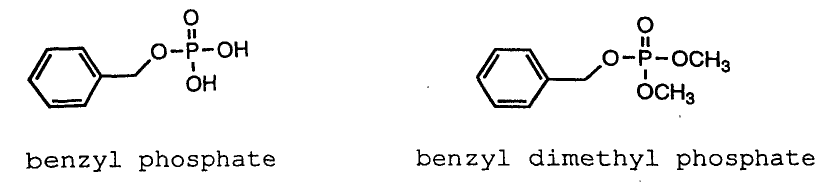

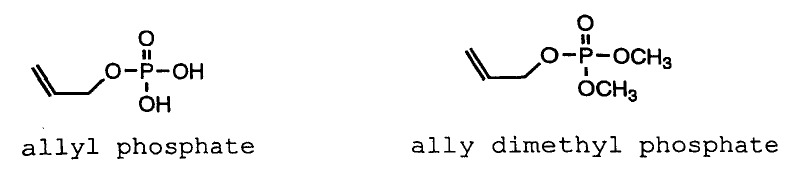

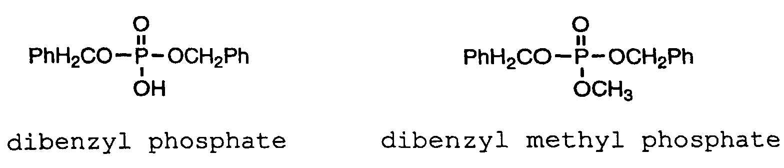

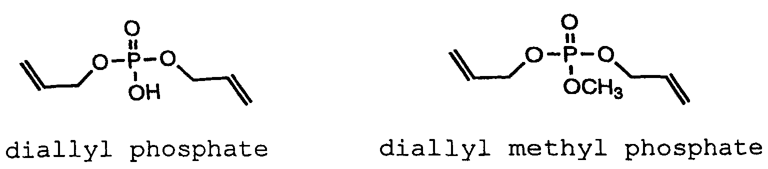

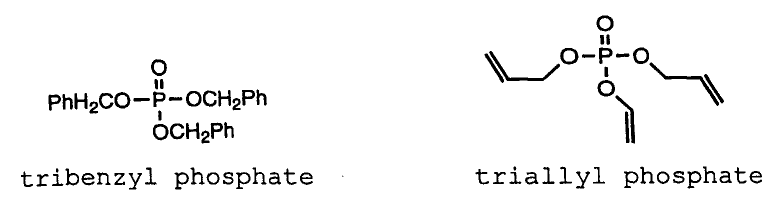

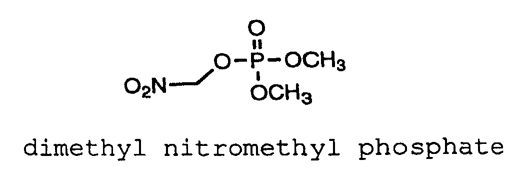

Examples of phosphate compounds having at least one substituent containg the bond structure of C(sp)-C(sp³)-O-P(=O)(OR)² include the following:

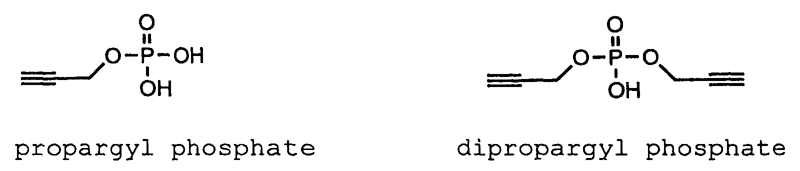

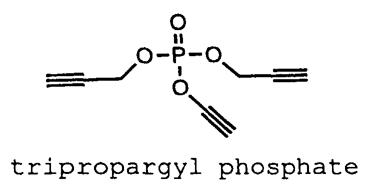

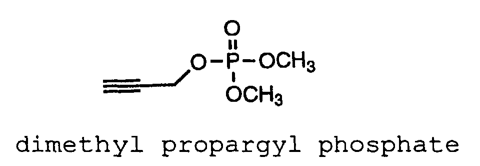

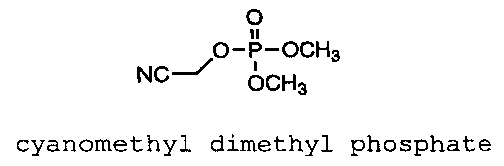

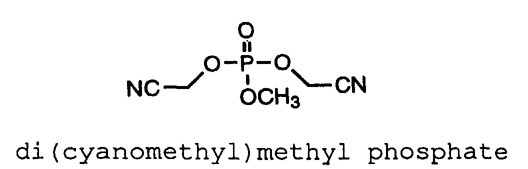

The above described compounds are only intended to be exemplary of those that are useful with the present invention, and are not to be construed as limiting. Those skilled in the art will readily recognize phosphate compounds which come under the purview of the general formula set forth above and which will be useful as additives for the electrolyte to achieve high charge/discharge capacity, long cycle life and to minimize the first cycle irreversible capacity according to the present invention.

While not intended to be bound by any particular theory, it is believed that the formation of O=P-(O-Li)ₙ(OR)ₘ (n = 1 to 3; m = 0 to 2) deposited on the anode surface is responsible for the improved performance of the lithium-ion cells. In the case of a strong O-R bond (R = methyl or phenyl for example), the reduction of the phosphate additive by the lithium anode does not result in the O-R bond cleavage to form an O-Li salt product. In contrast, if at least one, but not all three the R groups in the phosphate additive is hydrogen (acidic proton), it will react with lithium metal or lithiated carbon to form an O-Li bond directly. In addition, if at least one of the R groups is activated by having an sp or sp² hybridized carbon atoms bonded to an sp³ hybridized carbon atoms bonded to an oxygen atom bonded to the phosphorous atom, the O-R bond is relatively weak. During reduction, the O-R bond breaks to form a product containing the P-O-Li salt group. This anode surface film is ionically more conductive than the film formed in the absence of the additives and is responsible for the improved performance of the lithium-ion cell.

The concentration limit for the phosphate additive is preferably about 0.001M to about 0.40M. The beneficial effect of the phosphate additive will not be apparent if the additive concentration is less than about 0.001M. On the other hand, if the additive concentration is greater than about 0.40M, the beneficial effect of the additive will be canceled by the detrimental effect of higher internal cell resistance due to the thicker anode surface film formation and lower electrolyte conductivity.

The assembly of the cell described herein is preferably in the form of a wound element cell. That is, the fabricated cathode, anode and separator are wound together in a "jellyroll" type configuration or "wound element cell stack" such that the anode is on the outside of the roll to make electrical contact with the cell case in a case-negative configuration. Using suitable top and bottom insulators, the wound cell stack is inserted into a metallic case of a suitable size dimension. The metallic case may comprise materials such as stainless steel, mild steel, nickel-plated mild steel, titanium or aluminum, but not limited thereto, so long as the metallic material is compatible for use with components of the cell.

The cell header comprises a metallic disc-shaped body with a first hole to accommodate a glass-to-metal seal/terminal pin feedthrough and a second hole for electrolyte filling. The glass used is of a corrosion resistant type having up to about 50% by weight silicon such as CABAL 12, TA 23 or FUSITE 425 or FUSITE 435. The positive terminal pin feedthrough preferably comprises titanium although molybdenum, aluminum, nickel alloy, or stainless steel can also be used. The cell header comprises elements having compatibility with the other components of the electrochemical cell and is resistant to corrosion. The cathode lead is welded to the positive terminal pin in the glass-to-metal seal and the header is welded to the case containing the electrode stack. The cell is thereafter filled with the electrolyte solution comprising at least one of the phosphate additives described hereinabove and hermetically sealed such as by close-welding a stainless steel ball over the fill hole, but not limited thereto.

The above assembly describes a case-negative cell, which is the preferred construction of the exemplary cell of the present invention. As is well known to those skilled in the art, the exemplary electrochemical system of the present invention can also be constructed in a case-positive configuration.

This invention includes a method for providing an electrochemical cell, comprising the steps of: a) providing a negative electrode which intercalates with an alkali metal; b) providing a positive electrode comprising an electrode active material which intercalates with the alkali metal; c) activating the negative and positive electrodes with a nonaqueous electrolyte; and d) providing a phosphate additive in the electrolyte, wherein the phosphate additive has the formula: (R¹O)P(=O) (OR²) (OR³) and wherein R¹, R² and R³ are the same or different, wherein at least one, but not all three, of the R groups is hydrogen, or at least one of the R groups has at least 3 carbon atoms and contains an sp or sp2 hybridized carbon atom bonded to an sp³ hybridized carbon atom bonded to the oxygen atom bonded to the phosphorus atom.

## Claims

1. An electrochemical cell which comprises
a) a negative electrode;
b) a positive electrode;
c) a nonaqueous electrolyte activating the negative and positive electrodes; and
d) a phosphate additive provided in the electrolyte which is a phosphate ester or a phosphate acid ester of the formula:
(R¹O)P(=O)(OR²)(OR³)
wherein:
R¹, R² or R³, which may be the same or different, may represent a hydrogen atom and at least one of R¹, R² or R³ represents a group which contains:
i) an sp hybridised carbon atom; or
ii) an sp² hybridised carbon atom; or
iii) a -I group
directly bonded to an sp³ hybridised carbon atom directly bonded to the oxygen atom directly bonded to the phosphorus atom with the provisos that: where two of R¹, R² and R³ represent an unsubstituted allyl group, the other group may not be a hydrogen atom; and none of R¹, R² and R³ may be an unsubstituted benzyl or an unsubstituted diphenyl methyl group.

2. An electrochemical cell according to claim 1 wherein:
R¹, R² or R³, which may be the same or different, may represent a hydrogen atom; at least one of R¹, R² or R³ represents a group which contains:
i) a substituted or unsubstituted acetylenically unsaturated group; or
ii) a substituted or unsubstituted olefinically unsaturated group; or
iii) a hetero atom-containing -I group; and
the or each remaining group R¹, R² or R³, if any, represents a substituted or unsubstituted alkyl group, preferably a lower (C1 to C5) alkyl group with the proviso that where two of the R¹, R² and R³ represent an unsubstituted allyl group, the other group may not be a hydrogen atom.

3. An electrochemical cell according to claim 1 or 2 wherein the phosphate additive (d) is selected from the group consisting of allyl phosphate, allyl dimethyl phosphate, diallyl methyl phosphate, triallyl phosphate, dimethyl nitromethyl phosphate, propargyl phosphate, dipropargyl phosphate, tripropargyl phosphate, dimethyl propargyl phosphate, cyanomethyl dimethyl phosphate, di(cyanomethyl) methyl phosphate and mixtures thereof.

4. An electrochemical cell according to any preceding claim wherein the electrolyte (c) includes a quaternary, nonaqueous carbonate solvent mixture.

5. An electrochemical cell according to any preceding claim wherein the electrolyte (c) comprises at least one linear carbonate selected from the group consisting of dimethyl carbonate, diethyl carbonate, dipropyl carbonate, ethylmethyl carbonate, methylpropyl carbonate, ethylpropyl carbonate, and mixtures thereof.

6. An electrochemical cell according to claim 5 wherein the electrolyte (c) comprises at least three of the linear carbonates.

7. An electrochemical cell according to any preceding claims wherein the electrolyte (c) comprises at least one cyclic carbonate selected from the group consisting of ethylene carbonate, propylene carbonate, butylene carbonate, vinylene carbonate, and mixtures thereof.

8. An electrochemical cell according to any preceding claim wherein the electrolyte (c) comprises ethylene carbonate and an equilibrated mixture of dimethyl carbonate, ethylmethyl carbonate and diethyl carbonate.

9. An electrochemical cell according to claim 8 wherein the ethylene carbonate is in the range of 20% to 50%, the dimethyl carbonate is in the range of 12% to 75%, the ethylmethyl carbonate is in the range of 5% to 45%, and the diethyl carbonate is in the range of 3% to 45%, by volume.

10. An electrochemical cell according to any preceding claim wherein the negative electrode (a) intercalates with an alkali metal and the positive electrode (b) comprises an electrode active material which intercalates with the alkali metal.

11. An electrochemical cell according to claim 10 wherein the alkali metal is lithium.

12. An electrochemical cell according to claim 11 wherein the anode (a) comprises a carbonaceous material capable of intercalating lithium and the cathode (b) comprises lithium cobalt oxide.

13. Use of a phosphate additive (d) as defined in claim 1, 2 or 3 in a nonaqueous electrolyte to reduce first cycle irreversible capacity in an electrochemical cell.
